# FASCICULE DE BREVET EUROPEEN

(11) **EP 0 358 537 B1**
(45) Date de publication et mention de la délivrance du brevet: **14.12.1994**
(21) Numéro de dépôt: 89401884.5
(22) Date de dépôt: 30.06.1989
(51) Int. Cl.: A01B 15/14

(54) **Charrue réversible multisocs comportant un dispositif combinant la correction de dévers, la correction de déport latéral et la variation de largeur du labour**
Merhschariger Wendepflug mit einer gemeinsamen Einrichtung zur Neigungsverstellung, Seitengriffregelung und Arbeitsbreiten-Einstellung
Multifurrow reversible plough having a device combining level adjustment, off-setting adjustment and width adjustment

(30) Priorité: 05.09.1988 FR 8811582
(43) Date de publication de la demande: 14.03.1990
(73) Titulaire: HUARD S.A., F-44110 Chateaubriant (FR)
(72) Inventeur: Perret, Louis, F-44110 Chateaubriant (FR); Gentilhomme, Guy, F-44110 Chateaubriant (FR); Oger, Gérard, F-44660 Rouge (FR)
(74) Mandataire: Loyer, Bertrand

(56) Documents cités:
- FR-A- 2 551 305
- GB-A- 2 172 486

## Description

La présente invention est relative à une charrue réversible multisocs cans laquelle les dispositifs de correction de dévers de pointe, de déport latéral et de modification de la largeur de labour sont combinés en un seul mécanisme.

Une charrue réversible comporte un avant-train destiné à être attelé aux trois bielles d'attelage d'un tracteur et un arrière-train, portant les corps de labour, cet arrière-train étant relié à pivotement à l'avant-train par un axe horizontal parallèle à le direction d'avancement de l'ensemble tracteur/charrue. Pour changer de côté de labour on fait pivoter, par tout moyen approprié, l'arrière-train par rapport à l'avant-train. Lorsque la charrue comporte une pluralité de corps de labour (charrue dite multisocs), ces corps de labour sont disposés, de préférence, sur l'arrière-train selon une ligne oblique.

Il est nécessaire que, lorsque la charrue est attelée derrière un tracteur, les contreseps des corps de labour, qui sont évidemment parallèles entre eux, soient parallèles à la direction d'avancement du tracteur sinon la charrue travaille "en crabe", ce qui augmente l'effort de traction et l'usure des pièces. L'angle que fait le contresep, qui est en général prolongé par une pointe de soc, s'appelle "l'angle de dévers de pointe".

Il est d'autre part nécessaire que, lorsque le tracteur est en position de travail, c'est-à-dire avec les roues d'un même côté dans le fond du sillon précédemment tracé, la distance entre le premier corps de labour et la mureille dudit sillon précédent soit la même que celle séparant les autres corps de labour, sans quoi le premier sillon aura une largeur différente de celle des autres, ce qui est à éviter. Ce décalage de la charrue par rapport au tracteur s'appelle le "déport latéral".

Pour corriger le déport latéral, il est connu de monter l'avant-train sur une poutre transversale, portant les tourillons d'attelage aux deux bielles inférieures de traction du tracteur, par des moyens permettant de faire coulisser latéralement l'avant-train sur cette poutre, la charrue étant alors déplacée dans son ensemble parallèlement à elle-même.

Pour corriger le dévers de pointe, on peut soit disposer un appareillage mécanique permettant d'orienter l'avant-train par rapport à la poutre d'attelage mentionnée précédemment soit faire avancer le tracteur en laissant libre les bielles d'attelage. Sous l'effet de la réaction du sol l'ensemble se déplace pour prendre une position d'équilibre, mais ce déplacement entraîne une modification du déport latéral.

Pour obtenir le meilleur réglage de la charrue, il est préférable de disposer de deux moyens de réglage indépendants : l'un commandant l'orientation de l'axe longitudinal de la charrue (correction de dévers de pointe) : l'autre commandant la position latérale de la charrue par rapport à l'axe longitudinal du tracteur (correction de déport latéral).

Cependant avec l'augmentation de la puissance des tracteurs et l'augmentation concommittante de nombre de corps de labour des charrues, il s'est avéré que le déplacement latéral de l'avant-train de la charrue sur sa poutre d'attelage présente l'inconvénient de décaler le centre de gravité de la charrue par rapport à l'axe longitudinal médian du tracteur et que ce décalage, peu genant pour des charrues bi-socs, devient de plus en plus gênant au fur et à mesure que le nombre de socs augmente.

Il est également connu de réaliser l'arrière-train en deux parties : une première partie, montée à pivotement sur l'arbre horizontal de retournement porté par l'avant-train et une deuxième partie, à l'arrière, reliée à la première partie par deux bielles formant un parallélogramme déformable. Cette deuxième partie est constituée d'un châssis oblique portant les corps de labour. La deuxième partie peut être déplacée latéralement par rapport à la première, tout en restant parallèle à elle-même. A l'inconvénient précité, qui demeure, s'ajoute alors le fait que le centre de gravité se décale latéralement par rapport à l'axe de retournement et lorsqu'il s'en écarte, la force nécessaire au retournement devient trop importante et il faut des vérins hydrauliques très puissants et donc onéreux pour réaliser le retournement.

Comme en pratique, les corrections nécessaires de dévers de pointe sont de l'ordre de 1 degré, il est apparu que l'on pouvait, en utilisant un arrière-train en deux parties attelées l'une à l'autre par des bielles, réaliser au moyen d'un mécanisme unique à la fois la correction de dévers de pointe et la correction de déport latéral. Dans ce but on a disposé les deux bielles, reliant l'une à l'autre les deux parties de l'arrière train, de façon qu'elles ne soient pas parallèles mais convergentes, leurs prolongements géométriques se recoupant en un point situé en arrière de la partie avant de l'arrière-train, au voisinage du centre de gravité de la charrue. On obtient ainsi un centre virtuel de rotation, la partie arrière ne se déplaçant plus parallèlement à elle-même, mais en pivotant légèrement ; ce centre virtuel de rotation coïncidant pratiquement avec le centre de gravité, celui-ci ne se déplace pratiquement pas.

Il est d'autre part connu de réaliser des charrues a largeur de labour variable en montant les corps de labour de façon pivotante sur un châssis oblique, qui constitue la partie arrière de l'arrière-train et qui peut pivoter sur lui-même autour d'un axe vertical de façon à faire varier l'angle que fait la ligne oblique sur lesquels les corps de labour sont alignés avec la direction d'avancement. Des dispositions de ce genre sont décrites dans le brevet français 2.401.597 du 5 septembre 1978. Cependant cette disposition présente l'inconvénient que la distance entre les corps de labour varie sans que la position du premier corps ne change ; de sorte que l'on retrouve l'inconvénient d'avoir un labour irrégulier.

On a donc proposé, notamment dans les brevets 2.517.504 du 3 décembre 1981 et 2.523.398 du 19 mars 1982 d'atteler la partie arrière oblique de l'arrière-train à la partie avant au moyen de bielles de façon qui parait analogue à ce qui a été décrit plus haut en ce qui concerne la disposition de correction simultanée de dévers de pointe et de déport latéral.

Cependant, il s'avère que ces deux systèmes sont incompatibles de sorte que l'on ne peut pas avec un seul dispositif avoir à volonté une correction de déport latéral et dévers de pointe et/ou une variation de largeur.

En effet, si l'on se trouve dans le cas où le premier soc est trop près de la roue (ou du sillon précédent) et qu'il faut l'en écarter, cela signifie qu'il faut diminuer la valeur de l'angle aigu que fait avec l'axe longitudinal médian de l'avant-train la ligne des corps de labour ; or avec une charrue à largeur variable lorsqu'on diminue cet angle on diminue automatiquement la largeur séparant les corps de labour. Autrement dit, quand on veut augmenter la largeur de la première raie de labour on diminue la largeur des autres raies et inversement.

Il y donc incompatibilité entre les fonctionnements des deux systèmes : la cinématique du changement d'écartement entre les socs exigeant que le centre virtuel de rotation de la ligne oblique des corps de labour soit en avant de la partie avant de l'arrière-train; alors que la correction de déport latéral se fait par rotation autour d'un centre virtuel de rotation situé en arrière. On pourrait éliminer cette incompatibilité en attelant l'une à l'autre les deux parties avant et arrière de l'arrière-train par deux bielles parallèles et de même longueur, mais alors on retomberait dans l'inconvénient précédemment exposé qui est le déport latéral du centre de gravité de la partie tournante (arrière) de l'arrière-train. Un tel inconvénient est négligeable pour des charrues bi-socs, il augmente avec le nombre de socs et devient très important pour des charrues quadrisocs et au-dessus ; de plus, un tel déplacement latéral en translation serait sans effet pour la correction de dévers de pointe.

Le document FR-A-2.551.305 décrit une charrue comportant un dispositif de réglage de la largeur de coupe pour l'ensemble des corps de charrue. Cette charrue est conçue pour pouvoir régler indépendamment le point de traction, mais ne permet pas d'obtenir trois réglages indépendants de la largeur de coupe, du déport latéral et du dévers de pointe. Une charrue de ce type correspond au préambule de la revendication 1.

La présente invention a pour but de combiner en un seul mécanisme : d'une part un mécanisme de correction de dévers de pointe ayant centre virtuel de rotation situé en arrière de la partie avant de l'arrière-train ; d'autre part un mécanisme de variation de la largeur de labour ayant un centre virtuel de rotation situé en avant de ladite partie avant de l'arrière-train. Ceci n'est pas possible avec les mécanismes connus.

La présente invention concerne une charrue réversible multisocs à largeur variable, comportant un avant-train adapt pour pouvoir être attelé à un tracteur par des bielles de traction d'un attelage trois points, un arrière-train en deux parties, la partie avant étant montée à pivotement le long de l'axe longitudinal médian dudit avant-train et une partie arrière constituant un châssis oblique portant les corps de labour ; les deux parties avant et arrière étant reliées l'une à l'autre par trois attaches articulées chacune par rapport à la partie avant et à la partie arrière; l'une de ces attaches étant constituée par une bielle rigide de fortes dimensions et de longueur invariable, les deux autres attaches étant de longueurs variables; des moyens étant prévus pour provoquer la variation de longueur des deux attaches de longueurs variables; les ages portant lesdits corps de labour étant montés à rotation sur des pivots et actionnés par un parallélogramme déformable pour demeurer parallèles à eux-mêmes lorsque la partie arrière de l'arrière-train pivote; l'axe de l'attache intermédiaire et l'axe d'une autre attache convergeant en un centre virtuel de rotation correspondant au réglage de la largeur de labour, et situé en avant de l'arrière-train ladite, charrue etant caractérisée par le fait que, en combinaison :
a) l'axe de la bielle rigide de fortes dimensions et l'axe de l'attache de longueur variable la plus éloignée de la bielle rigide de fortes dimensions convergent en un deuxième centre virtuel (C) de rotation, correspondant au réglage combiné du déport latéral et du dévers de pointe, et situé en arrière de l'arrière-train, et
b) le deuxième centre virtuel de rotation (C) correspondant au réglage combiné du déport latéral et du dévers de pointe coïncide pratiquement avec le centre de gravité de l'arrière-train.

Selon une première variante de réalisation de l'invention, les deux attaches à longueur variable sont constituées par deux vérins à double effet conjugués entre eux, l'un des deux vérins étant un vérin double.

Selon une deuxième variante de réalisation, les deux attaches à longueur variable sont constituées par deux vérins à double effet, convergeant l'un vers l'autre en un point de fixation commun situé sur la partie arrière de l'arrière-train.

A titre d'exemple non limitatif, on a représenté aux dessins annexés :
Figure 1, une vue en plan d'un premier exemple de réalisation d'une charrue réversible tri-socs, munie d'un dispositif selon l'invention, les pièces étant en position intermédiaire;
Figures 2 et 3 deux vues schématiques illustrant les deux positions extrêmes des pièces de la charrue de la figure 1.
Figure 4, une vue en plan d'un deuxième exemple de réalisation;
Figures 5 et 6 deux vues schématiques illustrant le fonctionnement de la charrue de la figure 4.

En se reportant à ces figures, on voit que la charrue comprend un avant-train 1 solidaire d'une poutre transversale 2 munie à ses deux extrémités de tourillons d'attelage 2a permettant de l'atteler aux deux bielles inférieures d'attelage 3 d'un tracteur non représenté.

L'attelage de l'avant-train 1 au tracteur est complété par la bielle du troisième point 4.

L'arrière-train de la charrue est en deux parties : une partie avant 5 montée à pivotement sur l'avant-train 1 de façon à pouvoir pivoter autour de l'axe longitudinal 6 pour le retournement de la charrue ; une partie arrière 7 qui constitue le châssis portant les corps de labour 8. Le châssis 7 comporte une partie oblique 7a et une partie triangulaire 7b.

La charrue représentée à titre d'exemple étant une charrue réversible tri-socs, la partie oblique 7a comporte trois consoles 16a portant chacune un pivot vertical 16 sur lesquelles sont articulés les ages 15 portant les corps de labour 8. Pour simplifier la figure, on a représenté pour chaque age 15 un seul corps de labour 8, le corps de labour à droite reposant sur le sol, le corps de labour à gauche en position haute n'étant pas représenté.

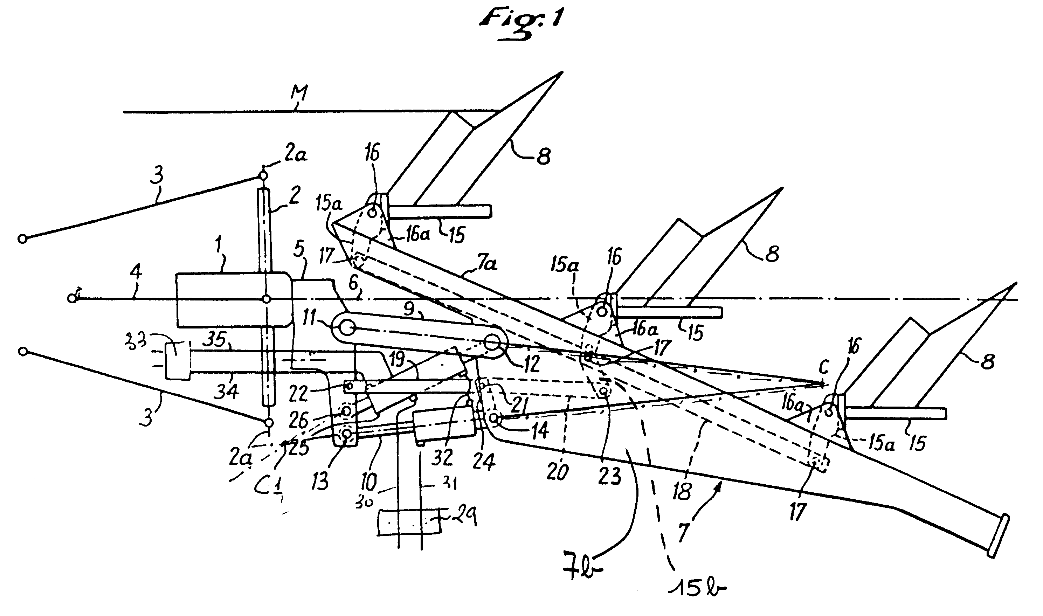

Chaque age 15 est solidaire d'un levier 15a, chaque levier 15a étant relié à une tringle 18 par un pivot 17. Il en résulte que les leviers 15a forment avec la tringle 18 et les pivots 16 un parallélogramme déformable commandant la rotation des ages 15, comme cela est connu dans les dispositifs de variation de la largeur de labour et est notamment décrit dans les brevets français sus-mentionnés 2.517.50̸4 et 2.523.398. Dans l'exemple représenté à la figure 1, le châssis 7 est creux de sorte que la tringle 18, les pivots 17 et les extrémités inférieures des leviers 15a sont logés à l'intérieur du châssis, ce qui les met à l'abri de la poussière, des projections de terre et des chocs.

La liaison entre la partie avant 5 de l'arrière-train et la partie arrière ou châssis 7 est assurée par une bielle 9 de grandes dimensions, cette bielle 9 étant destinée à supporter l'essentiel de l'effort de traction. La bielle 9 est articulée sur la partie 5 par un pivot 11 et sur la partie 7 par un pivot 12. Les pivots 11 et 12 sont disposés de telle sorte que la bielle 9 soit voisine de l'axe 6, mais non parallèle à cet axe et soit dirigée vers un point C qui est situé à proximité du centre de gravité de la charrue, la droite géométrique passant par les pivots 11 et 12 passant pratiquement par le centre de gravité de la charrue lorsque les pièces sont dans la position intermédiaire représentée à la figure 1.

A la bielle 9, qui constitue la première attache sont associés deux tirants de longueur variable 10̸ et 25, qui, dans l'exemple représenté sont des vérins hydrauliques.

Le vérin hydraulique 10̸, qui est un vérin à double effet est articulé sur la partie avant 5 de l'arrière-train par un pivot 13 et sur la partie arrière ou châssis 7 par un pivot 14. Les pivots 13 et 14 sont disposés de façon que les droites 13-14 et 11-12 soient convergentes, le point de convergence étant le point C. Les quatre points 11, 12, 13 et 14 forment un quadrilatère irrégulier déformable. L'ensemble constitué par la partie 5, la partie 7, la bielle 9 et le tirant 10̸ constitue le mécanisme de correction de déport latéral et de dévers qui est connu.

Entre la partie avant 5 et la partie arrière 7 de l'arrière train est disposée une troisième attache constituée par le vérin 25. Ce vérin est articulé à la fois sur la partie avant 5 et sur la partie arrière 7 par deux pivots et ces deux pivots sont disposés de façon telle que la ligne géométrique passant par ces deux pivots converge avec la ligne 14-13 en un point C1 situé à l'avant de l'arrière-train de la charrue. Dans l'exemple représenté, le vérin 25 est articulé sur la partie avant 5 par un pivot 26 situé entre le pivot 11 et le pivot 13, mais plus près du pivot 13 que du pivot 11 ; il est articulé sur la partie arrière 7 par le pivot 12 ; l'important étant que les lignes 12-26 et 14-13 soient convergentes et que leur point de convergence C1 se trouve à l'avant de l'arrière-train de la charrue. Les quatre points 26, 12, 14, 13 forment un quadrilatère irrégulier déformable orienté en direction opposée de celle de l'autre quadrilatère irrégulier déformable 11, 12, 14, 13.

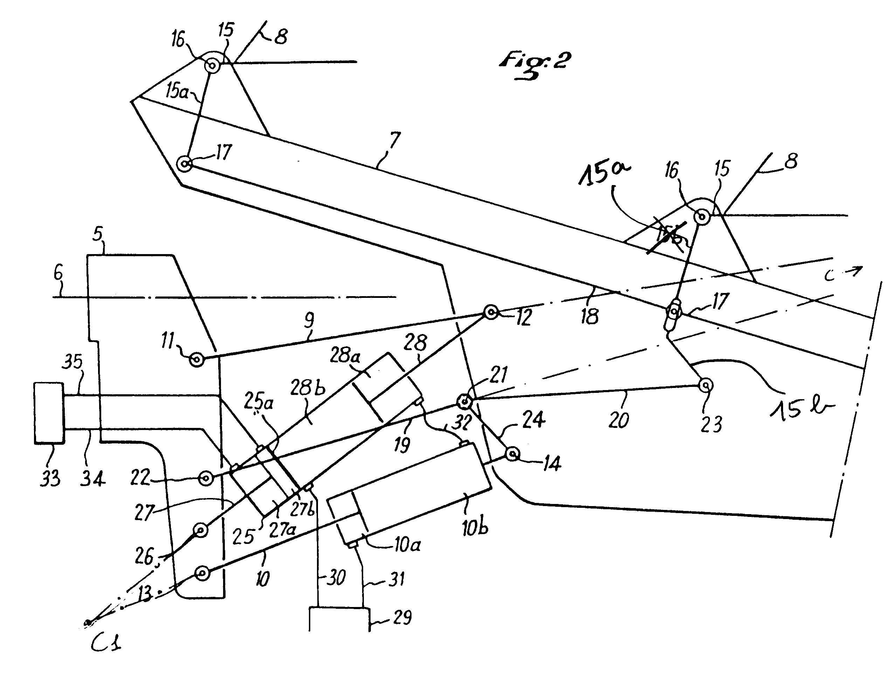

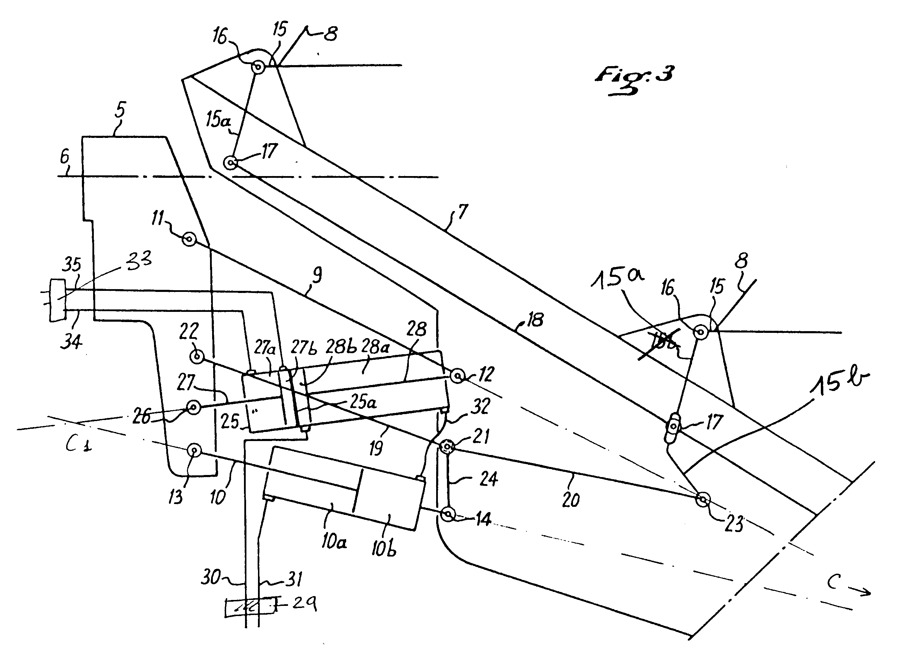

Le vérin 25 a une constitution particulière qui apparaît sur les figures 2 et 3. Tout d'abord c'est un vérin double en ce sens que son cylindre est divisé en deux parties par une cloison 25a et qu'il comporte deux tiges de piston 27 et 28, la tige 27 étant articulée sur le pivot 26 et la tige 28 sur le pivot 12. Le piston 27 définit deux chambres 27a et 27b qui, par les conduites 34 et 35, aboutissent à un distributeur 33. La chambre 28b communique par une conduite 30̸ avec un distributeur 29 tandis que la chambre 28a communique par la canalisation 32 avec la chambre 10̸b du vérin 10̸, la chambre 10̸a communiquant avec le distributeur 29 par la conduite 31. On peut dire que la partie 28 du vérin 25 et le vérin 10̸ sont montés en série sur les conduites 30̸, 32, 31 du distributeur 29. Les deux vérins 10̸ et 25 constituent les deux systèmes d'attaches définissant le quadrilatère 13, 26, 12, 14 du mécanisme de variation de largeur entre corps de labour, le déplacement du point 12 de ce quadrilatère se faisant selon un arc de cercle ayant la bielle 9 comme rayon.

Le déformation du quadrilatère 13, 26, 12, 14 va provoquer simultanément un déplacement latéral et une rotation de la partie arrière 7 de l'arrière-train. Il faut que pendant cette rotation les ages 15 demeurent parallèles à eux-mêmes. Pour cela, l'un des leviers 15a (celui du milieu dans l'exemple représenté) est muni d'un prolongement 15b qui est attelé par un pivot 23 à une bielle articulée à son autre extrémité à la partie avant 5 par un pivot 22. Les positions relatives des points 22 et 23 sont déterminées de façon que le droite 22-23 passe pratiquement par le point C lorsque les pièces sont dans la position intermédiaire de la figure 1. Comme le mouvement du quadrilatère 13, 26, 12, 14 est guidé par la bielle 9, le point 12 décrivant un arc-de-cercle au cours duquel il recule et avance par rapport à la partie 5, il en résulte que la distance séparant les points 22 et 23 augmente puis diminue en passant par un maximum au voisinage de la position médiane des pièces (figure 1). Pour tenir compte de cette variation, la bielle joignant les points 22 et 23 est en deux parties 19 et 20̸ articulées l'une à l'autre par le pivot 21, ce pivot étant relié eu pivot 14 par une biellette 24.

Les figures 2 et 3 représentent les deux positions extrêmes, la figure 1 représentent la position intermédiaire : la figure 2 correspond à la largeur minimum de labour et la figure 3 à la largeur maximum. Pour aller de la figure 2 à la figure 3, c'est-à-dire pour augmenter la largeur de labour, on envoie par le distributeur 29 et la conduite 31 du liquide hydraulique sous pression dans la chambre 10̸a du vérin 10̸. Le liquide repousse le piston du vérin ce qui diminue la distance 13-14. Le liquide de le chambre 10̸b est transvasé dans la chambre 28a, et repousse le piston 28, le liquide se trouvant en 28b étant refoulé vers le distributeur 29 par la conduite 30̸ : la distance 26-12 diminue. La diminution de la distance 13-14 conjuguée avec le diminution de la distance 26-12 provoque simultanément : une rotation du châssis 7, l'angle que fait le partie oblique 7a avec l'axe longitudinal 6 augmentent : un déplacement latéral du châssis 7 , le premier age 15 se rapprochant dudit axe 6 ; une rotation simultanée de tous les ages 15, l'angle qu'ils font avec la partie 7e augmentant, afin qu'ils demeurent parallèles audit axe 6.

Le vérin 10̸ a les mêmes dimensions que la partie 28 du vérin 25, c'est-à-dire que l'on a :volume 10̸b + volume 28a = volume 28b + volume 10̸a.

Lorsque l'on veut opérer une correction combinée de dévers de pointe et déport latéral, sans modifier le largeur du labour on actionne le distributeur 33 : le liquide hydraulique sous pression est admis dans la chambre 27a pour diminuer le distance 26-12 ou dans la chambre 27b pour l'augmenter, la distance 13-14 demeurent constante. C'est alors le quadrilatère 11-12-14-13 qui se déforme.

On obtient donc, grâce à ces dispositions particulières la combinaison des deux systèmes qui autrement sont mécaniquement incompatibles.

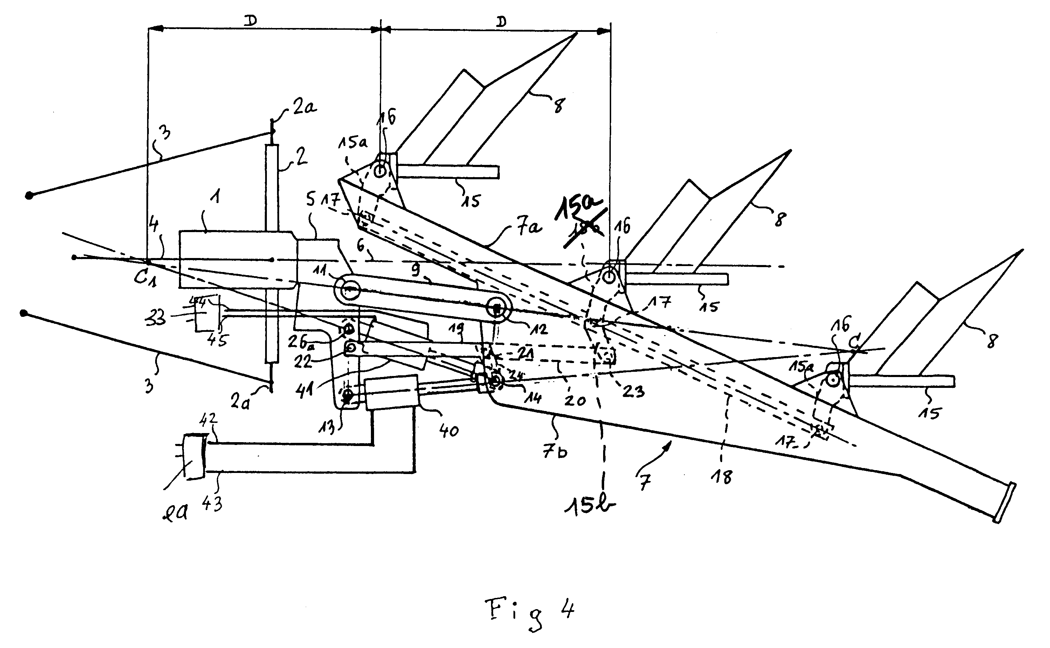

Les figures 4 à 6 représentent une variante de réalisation dans laquelle les mêmes pièces portent les mêmes références. Dans ce deuxième mode de réalisation, les vérins combinés 10̸ et 25 du premier exemple sont remplacés par deux vérins indépendants 40̸ et 41 alimentés respectivement par deux distributeurs 29 et 33 au moyen de conduites 42-43 et 44-45. D'autre part, le premier quadrilatère irrégulier déformable n'est plus constitué par les deux vérins combinés 10̸ et 25 mais par la bielle 9 et le vérin 41. Dans ce but le vérin 41 est articulé entre les parties 5 et 7 de l'arrière-train de la charrue en des points 14 et 26a disposés de façon telle que les droites passant par les points 12-11 d'une part et 14-26a d'autres part convergent en un point C1 qui, lorsque les pièces sont dans la position médiane représentée à la figure 4, est situé pratiquement sur l'axe longitudinal 4 de la charrue, en avant de l'avant-train 1, à une distance D du pivot 16 du premier corps de labour 8 égale à la distance D séparant deux corps 8 successifs.

La position du vérin 40̸ correspond à celle du vérin 10̸.

Dans ce deuxième exemple de réalisation la cinématique des pièces reste inchangée.

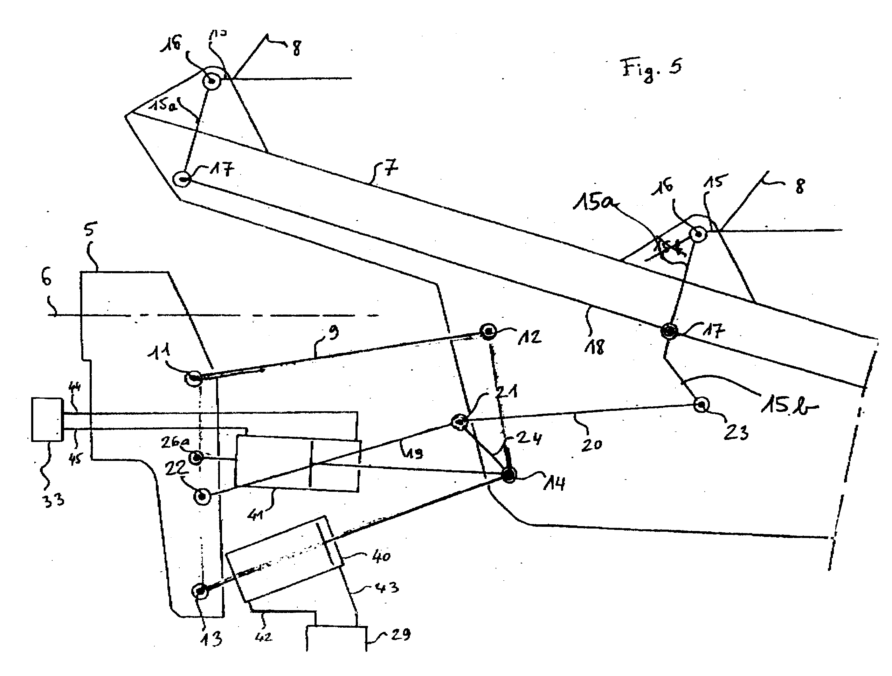

La figure 5 correspond au réglage de largeur minimum entre les corps de labour 8, comme sur la figure 2. Pour modifier cette largeur, on utilise le seul vérin 40̸. Dans ce cas, on agit sur le distributeur 29, le distributeur 33 étant fermé de façon que le vérin 41 ait une longueur fixe pendant que l'on raccourcit le vérin 40̸. La partie arrière 7 de l'arrière-train pivote alors autour du point C1.

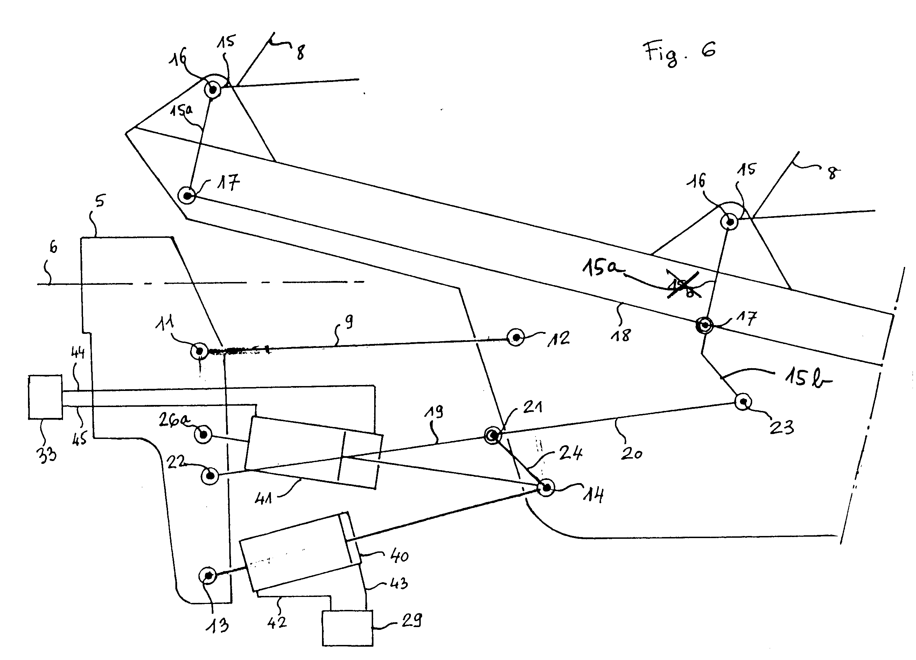

La figure 6 correspond au réglage combiné de déport latéral et de dévers de pointe, pour le même largeur entre corps que sur la figure 5. Pour effectuer ce réglage, on agit seulement sur le distributeur 33, le distributeur 29 étant fermé pour que le vérin 40̸ ait une longueur fixe pendant que fonctionne le vérin 41. La partie arrière 7 de l'arrière-train pivote alors autour du point C.

## Revendications

1. Charrue réversible multisocs à largeur variable, comportant un avant-train (1) adapté pour pouvoir être attele à un tracteur par des bielles de traction (3, 4) d'un attelage trois points, un arrière-train en deux parties, la partie avant (5) étant montée à pivotement le long de l'axe longitudinal médian (6) dudit avant-train (1) et une partie arrière (7) constituant un châssis oblique portant les corps de labour (8); les deux parties avant (5) et arrière (7) étant reliées l'une à l'autre par trois attaches articulées chacune par rapport à la partie avant et à la partie arrière; l'une de ces attaches étant constituée par une bielle rigide (9) de fortes dimensions et de longueur invariable, les deux autres attaches (10, 25-40, 41) étant de longueurs variables; des moyens étant prévus pour provoquer la variation de longueur des deux attaches de longueurs variables; les ages (15) portant lesdits corps de labour (8) étant montés à rotation sur des pivots (16) et actionnés par un parallélogramme déformable (15a, 16, 17, 18) pour demeurer parallèles à eux-mêmes lorsque la partie arrière (7) de l'arrière-train pivote; l'axe (12-26 ou 14-26a) de l'attache intermédiaire (25 ou 41) et l'axe (13-14 ou 11-12) d'une autre attache (10 ou 9) convergeant en un centre virtuel (C₁) de rotation correspondant au réglage de la largeur de labour, et situé en avant de l'arrière-train (7), caractérisée par le fait que, en combinaison :
a) l'axe (11-12) de la bielle rigide (9) de fortes dimensions et l'axe (13-14) de l'attache (10, 40) de longueur variable la plus éloignée de la bielle (9) rigide de fortes dimensions convergent en un deuxième centre virtuel (C) de rotation, correspondant au réglage combiné du déport latéral et du dévers de pointe, et situé en arrière de l'arrière-train (7), et
b) le deuxième centre virtuel de rotation (C) correspondant au réglage combiné du déport latéral et du dévers de pointe coïncide pratiquement avec le centre de gravité de l'arrière-train (7).

2. Charrue selon la revendication 1, caractérisée en ce que l'une des attaches à longueur variable est constituée par un vérin à double effet (10) et l'autre attache à longueur variable est constituée par un double vérin (25) divisé en deux parties par une cloison (25a) et comportant deux tiges de pistons (27, 28), la première partie (27) du vérin (25) étant commandée par un distributeur (33), la deuxième partie (28) du vérin (25) étant montée en série avec ledit vérin (10) sur un circuit (30, 31) alimenté par un distributeur (29).

3. Charrue selon la revendication 2, caractérisée en ce que le vérin (10) a les mêmes dimensions que la partie (28) du vérin (25) de telle sorte que le volume (10a + 28b) égale le volume (2a + 10b).

4. Charrue selon la revendication 1, caractérisée en ce que les deux attaches à longueurs variables sont constituées par deux vérins à double effet indépendants (40, 41).

5. Charrue selon la revendication 4, caractérisée en ce que les deux axes (13-14, 26a-14) des deux vérins (40, 41) à double effet convergent au point d'articulation (14) sur l'arrière-train (7), et en ce que l'axe du vérin intermédiaire (41) converge avec l'axe de la bielle rigide (9) au centre virtuel (C₁) de rotation correspondant au réglage de la largeur de labour.

6. Charrue selon la revendication 5, caractérisée en ce que les points d'articulation du vérin (40) extérieur et de la bielle rigide (9) sont disposés de façon que le point C soit au voisinage du centre de gravité de l'arrière-train lorsque les pièces sont en position intermédiaire.

7. Charrue selon la revendication 6, caractérisée en ce que les points d'articulation du deuxième vérin (41) et de la bielle rigide (9) sont disposés de façon que le centre C₁ soit en avant de la charrue pratiquement sur l'axe longitudinal (4) de la charrue et de préférence à une distance D du premier corps de labour (8) égale à la distance séparant les uns des autres les autres corps de labour.

8. Charrue selon l'une quelconque des revendications 1 à 7, caractérisée en ce que la déformation du parallélogramme déformable (15a, 16, 17, 18) est commandée par une bielle de commande (19-20) en deux parties articulées l'une à l'autre par un pivot (21), pour compenser les variations de la distance séparant les deux pivots (22, 23) extrêmes de la bielle (19-20).

9. Charrue selon l'une quelconque des revendications 1 à 8, caractérisée en ce que l'un des côtés du parallélogramme déformable (14a, 16, 17, 18) est relié par un levier (15b) à une bielle de commande (19-20) montée sur un pivot (22) situé sur la partie avant (5) et attelée par un pivot (23) audit levier (15b).

10. Charrue selon l'une quelconque des revendications 1 à 9, caractérisée en ce que l'attache intermédiaire (25 ou 41) est articulée sur l'arrière-train (7) en un point d'articulation (12 ou 14) commun avec une autre attache (9 ou 40).

## Claims

1. A multi-furrow reversible plough of adjustable width, having a forecarriage (1) adapted to be coupled to a tractor by traction links (3,4) of a three-point linkage, a rear carriage in two portions, the front portion (5) being pivotally mounted along the median longitudinal axis (6) of the forecarriage (1) and a rear portion (7) constituting an oblique frame carrying the ploughing bodies (8); the two portions front (5) and rear (7), being connected to one another by three fasteners, each articulated with respect to the front portion and to the rear portion; one of these fasteners being constituted by a rigid link (9) of large dimensions and fixed length, the two other fasteners (10, 25-40, 41) being of variable length; means being provided to cause the variation in length of the two fasteners of variable length; the beams (15) carrying the ploughing bodies (8) being rotationally mounted on pivots (16) and actuated by a deformable parallelogram (15a, 16, 17, 18) in order to remain parallel to themselves when the rear portion (7) of the rear carriage pivots; the axis 12-26 or 14-26a) of the intermediate fastener (25 or 41) and the axis (13-14 or 11-12) of another fastener (10 or 9) converging at a virtual centre of rotation (C1) corresponding to the adjustment of the ploughing width, and located in front of the rear carriage (7), characterised by the fact that, in combination :
a) the axis (11-12) of the rigid link (9) of large dimensions and the axis (13-14) of the fastener (10,40) of variable length the furthest away from the rigid link (9) of large dimensions converge at a second virtual centre of rotation (C) corresponding to the combined adjustment of lateral offset and of tip inclination, and located behind the rear carriage (7), and
b) the second virtual centre of rotation (C) corresponding to the combined adjustment of lateral offset and of tip inclination practically coincide with the centre of gravity of the rear carriage (7).

2. A plough according to Claim 1, characterised in that on the fasteners of variable length is constituted by a double acting jack (10) and the other faster of variable length is constituted by a double jack (25) divided into two portions by a partition (25a) and having two piston rods (27, 28), the first portion (27) of the jack (25) being controlled by a distributor (33) the second portion (28) of the jack (25) being mounted in series with the jack (10) in a circuit (30,31) supplied by a distributor (29).

3. A plough according to Claim 2, characterised in that the jack (10) has the same dimensions as the portion (28) of the jack (25) such that the volume (10a + 28b) equals the volume (2a + 10b).

4. A plough according to Claim 1, characterised in that the two fasteners of variable length are constituted by two independent double acting jacks (40, 41).

5. A plough according to Claim 4, characterised in that the two axes (13-14, 26a-14) of the two double acting jacks (40, 41) converge at the articulation point (14) on the rear carriage (7), and in that the axis of the intermediate jack (41) converges with the axis of the rigid link (9) at the virtual centre of rotation (C1) corresponding to the adjustment of the ploughing width.

6. A plough according to Claim 5, characterised in that the articulation points of the external jack (40) and of the rigid rod (9) are disposed such that the point C is close to the centre of gravity of the rear carriage when the parts are in the intermediate position.

7. A plough according to Claim 6, characterised in that the articulation points of the second jack (41) and of the rigid link (9) are disposed such that the centre C1 is in front of the plough practically on the longitudinal axis (4) of the plough and preferably at a distance D from the first ploughing body (8) equal to the distance separating the other ploughing bodies from one another.

8. A plough according to any one of Claims 1 to 7, characterised in that the deformation of the deformable parallelogram (15a, 16, 17, 18) is controlled by a control rod (19-20) in two portions articulated on one another by a pivot (21), to compensate for the variations in the distance separating the two end pivots (22, 23) of the rod (19-20).

9. A plough according to any one of Claims 1 to 8, characterised in that one of the sides of the deformable parallelogram (14a, 16, 17, 18) is connected by a lever (15b) to a control rod (19-20) mounted on a pivot (22) located on the front portion (5) and attached by a pivot (23) to the lever (15b).

10. A plough according to any one of Claims 1 to 9, characterised in that the intermediate fastener (25 or 41) is articulated on the rear carriage (7) at an articulation point (12 or 14) common with another fastener (9 or 40).

## Patentansprüche

1. Mehrschaliger Wendepflug veränderbarer Länge, mit einem Laufgestell (1) zum Anhängen an einen Schlepper über Zugstangen (3, 4) einer Dreipunktkupplung, mit einem Hinterwagen aus zwei Teilen, wobei der Vorderteil (5) um die Längsmittelachse (6) des Laufgestells (1) verschwenkbar ist und ein Hinterteil (7) ein schräges Fahrgestell bildet, das die Pflugschare (8) trägt, und wobei der Vorderteil (5) und der Hinterteil (7) miteinander über drei Befestigungselemente verbunden sind, deren jedes relativ zum Vorderteil und zum Hinterteil gelenkig angebracht ist, wobei ferner eines der Befestigungselemente von einer starren Stange (9) großer Ausdehnung und unveränderlicher Länge gebildet wird, während die beiden anderen Befestigungselemente (10, 25-40, 41) eine veränderbare Länge aufweisen, und mit Mitteln zum Bewerkstelligen der Längenveränderung der beiden Befestigungselemente veränderbarer Länge, wobei die Pflugbalken (15) die Pflugschare (8) tragen, drehbar auf Schwenkzapfen (16) sitzen und über ein verformbares Parallelogramm (15a, 16, 17, 18) betätigt werden, um parallel zueinander zu verbleiben, wenn der Hinterteil (7) des Hinterwagens verschwenkt, und wobei ferner die Achse (12-26 bzw. 14-26a) des mittleren Befestigungselementes (25 bzw. 41) und die Achse (13-14 bzw. 11-12) eines anderen Befestigungselementes (10 bzw. 9) in einem vor dem Hinterwagen (7) liegenden virtuellen Drehzentrum (C₁) entsprechend der Einstellung der Pflugbreite konvergieren, **gekennzeichnet durch** die Kombination folgender Merkmale:
a) die Achse (11-12) der starren Stange (9) großer Ausdehnung und die Achse (13-14) des Befestigungselementes (10, 40) veränderbarer Länge, die am weitesten von der starren Stange (9) großer Ausdehnung entfernt ist, laufen entsprechend der kombinierten Einstellung des seitlichen Versatzes und der Schneiden-Schrägstellung in einem zweiten virtuellen Drehzentrum (C) zusammen, das hinter dem Hinterwagen (7) liegt, und
b) das zweite virtuelle Drehzentrum (C) fällt entsprechend der kombinierten Einstellung von seitlichem Versatz und Schneiden-Schrägstellung praktisch mit dem Schwerpunkt des Hinterwagens (7) zusammen.

2. Pflug nach Anspruch 1, dadurch gekennzeichnet, daß eines der Befestigungselemente veränderbarer Länge von einem doppeltwirkenden Zylinder (10) und das andere Befestigungselement veränderbarer Länge von einem Doppelzylinder (25) gebildet wird, der über eine Zwischenwand (25a) in zwei Abschnitte unterteilt ist und zwei Kolbenstangen (27, 28) umfaßt, wobei der erste Abschnitt (27) des Zylinders (25) von einem Verteiler (33) gesteuert wird und der zweite Abschnitt (28) des Zylinders (25) in einer Leitung (30, 31), die von einem Verteiler (29) gespeist wird, in Serie mit dem Zylinder (10) geschaltet ist.

3. Pflug nach Anspruch 2, dadurch gekennzeichnet, daß der Zylinder (10) dieselben Dimensionen wie der Abschnitt (28) des Zylinders (25) aufweist derart, daß das Volumen (10a + 28b) gleich dem Volumen (2a + 10b) ist.

4. Pflug nach Anspruch 1, dadurch gekennzeichnet, daß die zwei Befestigungselemente veränderbarer Länge von zwei unabhängigen, doppeltwirkenden Zylindern (40, 41) gebildet werden.

5. Pflug nach Anspruch 4, dadurch gekennzeichnet, daß die beiden Achsen (13-14, 26a-14) der zwei doppeltwirkenden Zylinder (40, 41) in einem Gelenkpunkt (14) auf dem Hinterwagen (7) zusammenlaufen, und daß die Achse des Zwischenzylinders (41) mit der Achse der starren Stange (9) im virtuellen Drehzentrum (C₁) entsprechend der Einstellung der Pflugbreite zusammenläuft.

6. Pflug nach Anspruch 5, dadurch gekennzeichnet, daß die Gelenkpunkte des äußeren Zylinders (40) und der starren Stange (9) derart angeordnet sind, daß der Punkt C nahe am Schwerpunkt des Hinterwagens liegt, wenn sich diese Teile in einer Zwischenlage befinden.

7. Pflug nach Anspruch 6, dadurch gekennzeichnet, daß die Gelenkpunkte des zweiten Zylinders (41) und der starren Stange (9) so angeordnet sind, daß das Zentrum (C₁) vor dem Pflug praktisch auf dessen Längsachse (4) liegt und bevorzugt in einem Abstand D von der ersten Pflugschar (8) entfernt ist, der gleich dem Abstand ist, der die anderen Pflugschare voneinander trennt.

8. Pflug nach einem der Ansprüche 1 bis 7, dadurch gekennzeichnet, daß die Deformation des verformbaren Parallelogramms (15a, 16, 17, 18) von einer Steuerstange (19-20) gesteuert wird, die aus zwei Abschnitten besteht, welche zur Kompensation der Veränderungen des Abstands zwischen den zwei äußeren Drehgelenken (22, 23) der Stange (19-20) über ein Drehgelenk (21) aneinander befestigt sind.

9. Pflug nach einem der Ansprüche 1 bis 8, dadurch gekennzeichnet, daß eine der Seiten des verformbaren Parallelogramms (15a, 16, 17, 18) über einen Hebelarm (15b) mit einer Steuerstange (19-20) verbunden ist, die auf einem auf dem Vorderteil (5) gelegenen Drehgelenk (22) angebracht und mittels eines Drehgelenkes (23) an diesem Hebelarm (15b) befestigt ist.

10. Pflug nach einem der Ansprüche 1 bis 9, dadurch gekennzeichnet, daß das Zwischen-Befestigungselement (25 bzw. 41) auf dem Hinterwagen (7) über einen Gelenkpunkt (12 bzw. 14) zusammen mit einem anderen Befestigungselement (9 bzw. 40) angelenkt ist.
